# EUROPEAN PATENT APPLICATION

(11) **EP 1 239 401 A1**
(43) Date of publication of application: **11.09.2002**
(21) Application number: 02405129.4
(22) Date of filing: 22.02.2002
(51) Int. Cl.: G06K 7/00

(54) **A method for communication with multiple transponders**

(30) Priority: 05.03.2001 EP 01810228
(71) Applicant: Datamars SA, 6930 Bedano-Lugano (CH)
(72) Inventor: Stegmaier, Peter A., 6946 Ponte Capriasca (CH); Jobin, Jean-Marc, 6984 Pura (CH); Ishii, Takamasa, 6946 Ponte Capriasca (CH)
(74) Representative: Störzbach, Michael Andreas

(57) **Abstract**

A method for communication with multiple transponders, particularly for reading digital information from transponders. The information being different in every transponder, as may be a chip serial number (S/N), is transmitted by the transponders using the same response channel for all transponders in such a way that possible states of a digital information per digit are transmitted during different windows in time for every digit position using a type of modulation (e.g. ASK, FSK, PSK). Each window is associated to a possible state of a digit position. In one embodiment some of the windows are associated to a predetermined state corresponding to no modulation for reference.

## Description

The present invention relates to a method for communication with multiple transponders, particularly for reading digital information from transponders. In the following specification and claims "transponder" means any responding device which may be activated for transmitting information to an interrogating device.

In many fields of information interchange, the use of one communication channel for multiple transponders is a necessity. Many approaches have been published.

Here we describe a novel approach particularly useful for addressing, reading from, and writing to multiple passive transponders in the interrogating field of an interrogating device. The algorithm can be extended to other configurations as well as to other fields of application.

The algorithm according to the invention makes use of information which differs in every transponder to be communicated to contemporarily. This different information may well be a chip serial number (referred to as S/N), which is used below for the explanation of the principle.

Upon a specific command of the interrogator, all transponders respond with the complete S/N or with a part of it, according to the contents of the command: the command may be e.g. "transmit all S/N or transmit S/N bit 1 to bit 12". This is done by some modulation scheme as may be ASK, FSK or PSK.

The present invention particularly relates to handling of different bit patterns over the same communication channel for the assessment of the various transponder S/N: By separating the transponder modulation activity for the single information (bits) of the S/N into multiple windows in time per bit position of the S/N, collision of modulations indicating different information is avoided and the interrogator can determine for every bit position whether there are transponders in the field with bit information = 0 and/or bit information = 1 at the corresponding position.

The interrogator now can use a specific set of commands to have only those transponders respond whose S/N corresponds to a given combination at a given bit position determined by the interrogator using the previous call. This allows the interrogator to completely determine the S/N of every transponder.

The invention will now be explained in detail with reference to the accompanying drawings illustrating a preferred embodiment of the invention.
- Fig. 1: shows an example of the digital information e.g. chip S/N to be read from a transponder,
- Fig. 2: illustrates a first "slot method" according to the present invention,
- Fig. 3: illustrates another "slot method" according to the present invention,
- Fig. 4: illustrates an example of reading out and analysis of the digital information from three transponders, and
- Fig. 5: is a schematic illustration of the progress of analysis according to Fig. 4.

For all following explanations a hypothetical chip serial number (denoted in the following by S/N) is used. Any other information different in all transponders contemporarily in the same interrogator field can also be used.

Modulations shown in the examples are digital, and are able to transmit binary information (i.e. 0 and 1). The present invention is easily expandable to modulations which are able to represent more than 2 levels.

The following example describes the situation of multiple transponders being interrogated by one interrogator being e.g. in the form of a transceiver. Other configurations, i.e. a single transponder being interrogated or multiple interrogators interrogating multiple transponders can also be realized.

All following descriptions are independent of frequencies and field types (electric, magnetic, etc.) used for transponder communication as well as from active or passive transponder implementations.

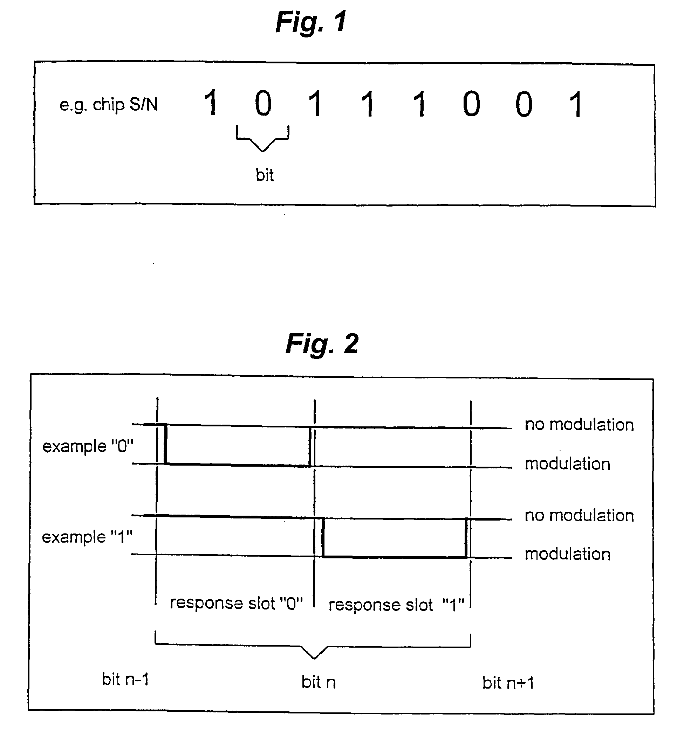

Fig. 1 shows an example of the digital information comprising 8 bits to be read from a transponder, for instance a chip serial number (S/N).

Fig. 2 illustrates a basic principle of this invention. Upon activation of one ore more transponder(s) within reach of an interrogator, the transponders simultaneously and synchronously retransmit bit information after bit information.

In one embodiment of the present invention the transmission of the information is activated upon request by the interrogator. In a preferred embodiment synchronization of the transmission is achieved by a command issued by the interrogator.

In another preferred embodiment the transponders wait a specified time after power-up for the interrogator to issue a command. If no command is received, the transponders go into a continuous transmission mode transmitting their S/N.

For every bit transmitted, two time slots or windows are provided per bit, for instance bit n as shown in Fig. 2. As shown in Fig. 2, response slot "0" contains modulation of the response signal for information "0", while response slot "1" contains modulation of the response signal for information "1". Of course, the response of one determined transponder for bit n may only be "0" or "1", but Fig. 2 illustrates the principle, and if two or more transponders are activated for answering in synchronism, it may of course arrive, that modulation will be detected for both information or levels "0" and "1" as will be seen later. Thus, detection of modulation in slot "0" indicates the presence of one or more transponders with the binary information "0" at the corresponding position of the S/N, while detection of modulation in slot "1" indicates the presence of one or more transponders with the binary information "1" at the corresponding position of the S/N. Modulation is chosen so that modulating in the same time slot can have deeper but still detectable modulation.

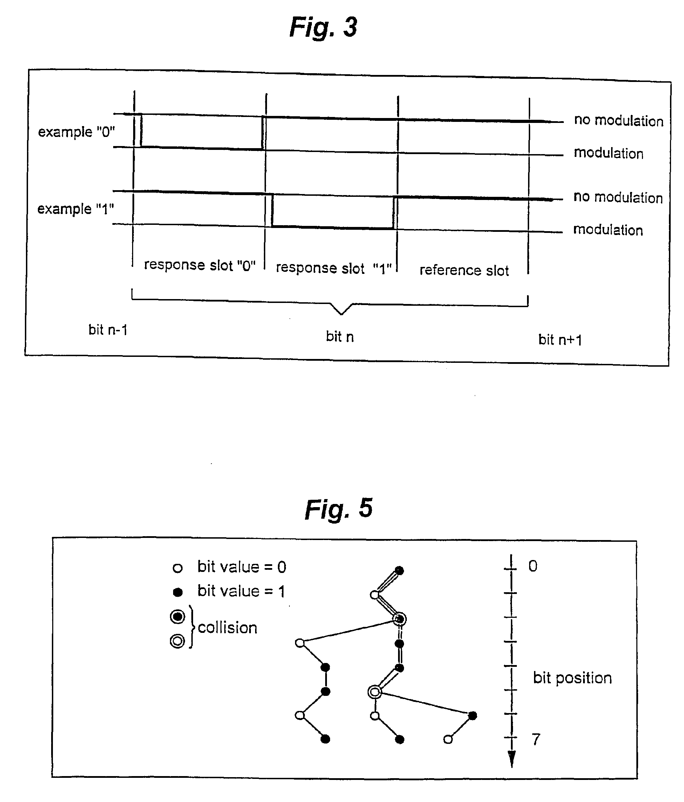

Fig. 3 shows another type of slot method. Response slots "0" and "1" correspond to those illustrated in Fig. 2. A third reference slot for "no modulation" is added. In this way the accuracy of the modulation detection may be enhanced, e.g. for high ambient noise conditions. The reference slot provides the interrogator periodically with a reference signal, which allows a comparison of the signals received in slots "0" and "1" to defined no-modulation conditions.

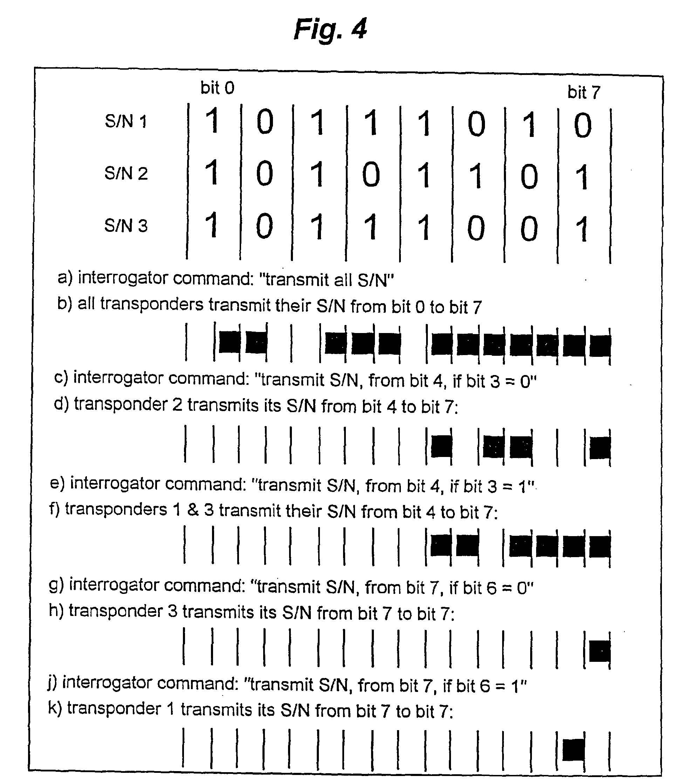

Fig. 4 illustrates an example of an interrogating sequence assessing the information (S/N) of three transponders, S/N 1, S/N 2 and S/N 3. As will be seen from Fig. 4 and its text, the interrogator can send specific commands. In a first step a) the command is: "transmit all S/N". Dark fields in the two time slots associated to each bit indicate at the left "modulation 0" and at the right "modulation 1". Thus, since all digital information S/N comprise the first bit "1", the answer received is only "1", that is, whatever number of transponders have answered, all their answers comprise a first bit "1". Accordingly, the second bit of the information of each transponder is "0", this resulting in an information "0" by the dark field in the left slot of bit 1. For bit 2 all answers comprise the value "1". For bit 3 the information differs for one of the transponders, this resulting in the information that at least two transponders have answered with different values for bit 3. This situation, which also applies for bits 5, 6 and 7, will be called "collision" in the following, and this situation needs specific treatment for assessing the full digital information from all transponders. A first step in this direction is indicated at c) in Fig. 4. The interrogator issues the command to the transponders to only transmit bits 4-7 of the S/N and defines the value of bit 3=0. Since transponder No. 2 only has value "0" in bit 3, this transponder now transmits all remaining bits 4 to 7, whereby the full information from this transponder is available. In a further step e) the transponders are asked to transmit the values of bits 4 to 7 if bit 3 is "1". This results in other collision situations for bits 6 and 7, and it is evident from Fig. 4, by which method of further approximation the full information from transponders Nos. 1 and 3 is obtained.

The interrogator command "transmit S/N, from bit n, if bit n-1 = x" as shown in steps c, e, g, h of Fig. 4 may also include all previous bit values in order to avoid misinterpretation if additional transponders enter the interrogating field while the method is executed.

Various strategies can be applied to find the remaining S/N as may be returning to the previous collision and selecting a different transponder by using an appropriate command or returning to the "top" by issuing another "transmit all S/N" command.

Fig. 5 schematically illustrates the steps explained in Fig. 4, for transponders Nos. 1 to 3. It particularly shows that specific strategies are necessary as soon as collision occurs.

One further such strategy, which may be called "split S/N inquiry" works as follows: Upon a specific command of the interrogator during transmission of the S/N by the transponders, all transponders in the interrogating field halt transmission and wait for the next command. This approach can be useful if the time after a collision is to be saved allowing the interrogator to immediately call the respective transponders using a specific preselected value for the bit position at which the collision occurred. It may be advisable to implement this option by one or more short transmission pauses during the transmission of the S/N, e.g. every 8 bits, to allow transponders to listen to such commands issued by the interrogator.

In one embodiment of the method the interrogator can halt transmission of the transponders (mute condition) between any two bit cells by issuing a corresponding command for saving time if e.g. the interrogator determines that the following part of the different information S/N does no longer yield significant information. After entering into the halt or mute condition the transponders wait for the next command.

In another embodiment the transponders can be muted temporarily or permanently by issuing an appropriate command to the last active transponder or by integrating the S/N of the transponder into the command.

Still in another embodiment the transponders wait a specified time after the transmission of the S/N before transmitting the S/N again for allowing the interrogator to issue a command after the first or any subsequent transmission of the S/N.

In a further embodiment the information transmitted by the transponders is protected by some type of checksum, which is e.g. based on a CRC algorithm ("cyclic redundancy check"). If e.g. only one transponder is in the field, the complete S/N is read immediately and checked using the checksum. This avoids further communication with the transponder concerning S/N assessment. Usage of such a checksum results in an increase of data reliability and the corresponding information can be used for further processing e.g. for database access.

Still in a further embodiment the information of known length and different in every transponder, e.g. a unique S/N being of a predetermined number of digits, is complemented by additional bits, as may be header bits for synchronization, stuff-bits and the like, wherein the additional bits are also transmitted by the transponders.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

### Glossary

- ASK: amplitude shift keying
- CRC: cyclic redundancy check
- FSK: frequency shift keying
- PSK: phase shift keying
- S/N: serial number

## Claims

1. A method for communication with multiple transponders, particularly for reading digital information from transponders, wherein information being different in every transponder, as may be a chip serial number (S/N), is transmitted by the transponders using the same response channel for all transponders in such a way that possible states of a digital information per digit are transmitted during different windows in time for every digit position using a type of modulation (e.g. ASK, FSK, PSK), each window being associated to a possible state of a digit position, thus allowing the interrogator to assess the existence of the respective information in the transponder population per digit position.

2. A method for communication with multiple transponders, particularly for reading digital information from transponders, wherein information being different in every transponder, as may be a chip serial number (S/N), is transmitted by the transponders using the same response channel for all transponders in such a way that possible states of a digital information per digit are transmitted during different windows in time for every digit position using a type of modulation (e.g. ASK, FSK, PSK), the windows being associated to a possible state of a digit position or to a predetermined state corresponding to no modulation for reference, thus allowing the interrogator to assess the existence of the respective information in the transponder population per digit position.

3. A method according to claim 1 or 2, wherein the information has a known length.

4. A method according to claim 1 or 3, wherein the digital information is encoded in the binary system so that each window corresponds to a bit value.

5. A method according to claim 2 or 3, wherein the digital information is encoded in the binary system (e.g. 0, 1) so that the first window corresponds to one value (e.g. 0), the second window corresponds to another bit value (e.g. 1), and the third window corresponds to no modulation for reference.

6. A method according to any of claims 1 to 5, wherein the information is only transmitted upon request by the interrogator.

7. A method according to any of claims 1 to 6, wherein the information is transmitted in a synchronized way e.g. by a command issued by the interrogator.

8. A method according to any of claims 1 to 7, wherein with a set of commands, the interrogator is capable of calling to respond or writing to only this/those transponder/s with selected parts of the information being different in every transponder.

9. A method according to any of claims 1 to 8, wherein the interrogator may halt transmission of the transponders between any two bit cells by issuing a corresponding command for saving time if the interrogator determines that the following part of the different information does no longer yield significant information.

10. A method according to any of claims 1 to 9, wherein after the transmission of a determined number of information bits the transponders pause modulation for listening to eventual commands issued by the interrogator.

11. A method according to any of claims 1 to 10, wherein transponders can be muted temporarily or permanently by issuing an appropriate command to the last active transponder or by integrating the information, preferably S/N, of the transponder into the command.

12. A method according to any of claims 1 to 11, wherein the transponders wait a specified time after power-up for the interrogator to issue a command and wherein the transponders go into a continuous transmission mode transmitting their information, preferably S/N, if no command is received.

13. A method according to claim 12, wherein the transponders wait a specified time after the transmission of the information, preferably S/N , before transmitting the information again for allowing the interrogator to issue a command after the first or any subsequent transmission of the information.

14. A method according to any of claims 1 to 13, wherein the information transmitted by the transponders is protected by some type of checksum as may be a CRC algorithm, for increasing data reliability.

15. A method according to any of claims 1 to 14, wherein the information transmitted by the transponders is complemented by additional bits, preferably not containing information as may be header bits for synchronization, stuff-bits and the like.
